Europäisches Patentamt

European Patent Office

Office européen des brevets

(11) Publication number : **0 472 348 A2**

# EUROPEAN PATENT APPLICATION

(21) Application number : **91307472.0**

(22) Date of filing : **13.08.91**

(51) Int. Cl.⁵ : **H04N 7/15**

(30) Priority : **22.08.90 US 571682**

(43) Date of publication of application :
**26.02.92 Bulletin 92/09**

(84) Designated Contracting States :
**DE FR GB IT**

(71) Applicant : **AMERICAN TELEPHONE AND TELEGRAPH COMPANY**
**550 Madison Avenue**
**New York, NY 10022 (US)**

(72) Inventor : **Dannwolf, Jurgen W.**
**745 Paramount Way**
**Bricktown, New Jersey 08724 (US)**
Inventor : **Leed, Daniel**
**180 Cabrini Blvd. No.112**
**New York, New York 10033 (US)**

(74) Representative : **Buckley, Christopher Simon Thirsk et al**
**AT&T (UK) LTD. 5 Mornington Road**
**Woodford Green, Essex IG8 OTU (GB)**

(54) **Economical videoconference system.**

(57)   A videoconferencing system includes a plurality of videoconferencing sites (A to D), and a centralized video conference bridge. Each site receives an audio signal (from 122) including a superimposed control signal (from 114 to 117). The control signal designates all sites as passive, except for one site, which is designated as dominant and whose video signal is thereby broadcast to all other sites. During the videoconference, while the dominant site may change frequently, only one site at time is designated as dominant. Thus, only one video channel is required, rather than a high speed video channel from each site to the VCB, as was required in prior arrangements.

EP 0 472 348 A2

FIG. 1

## Technical Field

This invention relates to videoconferencing systems, and more particularly, to an improved method and apparatus for controlling a multisite videoconference.

## Description of the Prior Art

A videoconference is a multiple party call linking voice and video among a plurality of sites. Each site includes an audio receiver for listening to the audio from other sites, and a video monitor for wiewing a selected one of the sites. The videoconference may be arranged for fully interactive audio, where each room hears the audio originating from each of the other rooms, or, in more restricted embodiments, each room may hear only the audio of the room it views. Recently, videoconference services have become available to effectuate business meetings between multiple sites nationwide, and even worldwide.

In a typical videoconference, each site includes a video monitor, similar to a large television screen, a video camera, and audio transmitter, and an audio receiver. The sites are usually connected via some switching arrangement, which is denoted herein a videoconference bridge (VCB). Assuming a fully interactive audio arrangement, each audio transmitter transmits its signal to the VCB, which sums various combinations of the incoming audio signals, and transmits an audio signal to the audio receiver at each site. The audio signal transmitted to each site from the VCB is the sum of all other audio signals from all other sites. Thus, each site hears everyone else talking, but does not hear its own voice echo.

The transmission of video signals is slightly more complex. Specifically, since the video monitor at each site can only display one image at a time, the network of sites must include some control mechanism for determining which site is to have its own image transmitted to all other sites, and further, what image is to be displayed on the video monitor at the transmitting site. Unlike voice, the video signals cannot simply be summed, since the sum of the video signals would be incomprehensible.

One arrangement for implementing the required control is described in "Implementation Guide: Multipoint Control Unit", a product brochure published by Compression Labs, Inc. (CLI) on February 15, 1990, the citation of which is not to be construed as an admission by applicants that the brochure constitutes prior art against this application. In the CLI arrangement, each site includes a communications link for conveying voice and video to the VCB. The VCB then determines which voice is "dominant" and routes the video from that site to all other sites. The dominant site, however, sees the video signal from the previous dominant site. In other modes, the user can preselect which site is to have ist video routed to all other sites.

In the CLI arrangement, each site must include a high bandwidth communications link to transmit the video signal in digital form, to the VCB. At the VCB, the incoming video signal from the dominant site is routed to all other sites, and the video signal from the previous dominant site is routed to the current dominant site. The video signals from all remaining sites are simply discarded.

The amount of bandwich required by each digital video signal depends upon the desired picture quality and the coding technique used for encoding the video signal, and typically is approximately .768 megabits/second. Considering, for example, a video conference of eight sites, it can be appreciated that a substantial amount of bandwidth is wasted. Specifically, there are always six sites, each transmitting a video signal at .768 megabits/second, whose video signal is discarded. Since the communications links used to transmit the video signals from the sites to the VCB must be paid for by the customer, substantial expence is incurred.

Another problem with the CLI arrangement is that the digital audio and video signals are transmitted as one high speed bit stream. Thus, in order for the VCB to determine which of the sites is the dominant site, it must decode the bit stream and extract the audio signal therefrom. Consequently, the particular code used at the sites to encode the video signal must be compatible with the VCB, and updating of encoding equipment at the sites requires updating of the VCB.

The problems remaining in the prior art are to provide a technique whereby the amount of bandwidth required to implement videoconferencing may be reduced, and further, wherein the bandwidth may be utilized in a more efficient manner than that described above. Further, it is also desirable to implement a videoconference bridge which is independent of the particular encoding technology used at each site.

## Summary of the Invention

The above problems are overcome and a technical advance is achieved in accordance with the invention which relates to a novel videoconferencing system. In the invention, a plurality of sites are interconnected by a VCB which monitors incoming audio signals to determine which of the sites is the dominant site, and then superimposes a separate control signal onto each of the outgoing audio signals. The control signals received by each site designate one site as the dominant site, and all other sites as passive. When a site is designated as dominant, that site turns on a transmitter which transmits its video signal to all other sites via a broadcast medium; e.g. via a satellite. When a new site becomes dominant, the previous dominant site turns off its satellite transmitter, and begins receiving video transmissions from the new dominant site.

In accordance with the above, only one broadcast video channel is required, and the video transmitters turn off and on at the appropriate times; i.e. based upon which site is dominant, to effectively share that channel, thereby resulting in significant bandwidth and cost savings. Further, since the VCB does not need to decode the digital video signal, the VCB design is independent of the particular video encoding technology used.

## Brief Description of the Drawing

FIG. 1 shows a video conference bridge (VCB) which may be employed in accordance with the invention; and
FIG. 2 is a block diagram of the equipment included in a typical videoconferencing site of the invention.

## Detailed Description

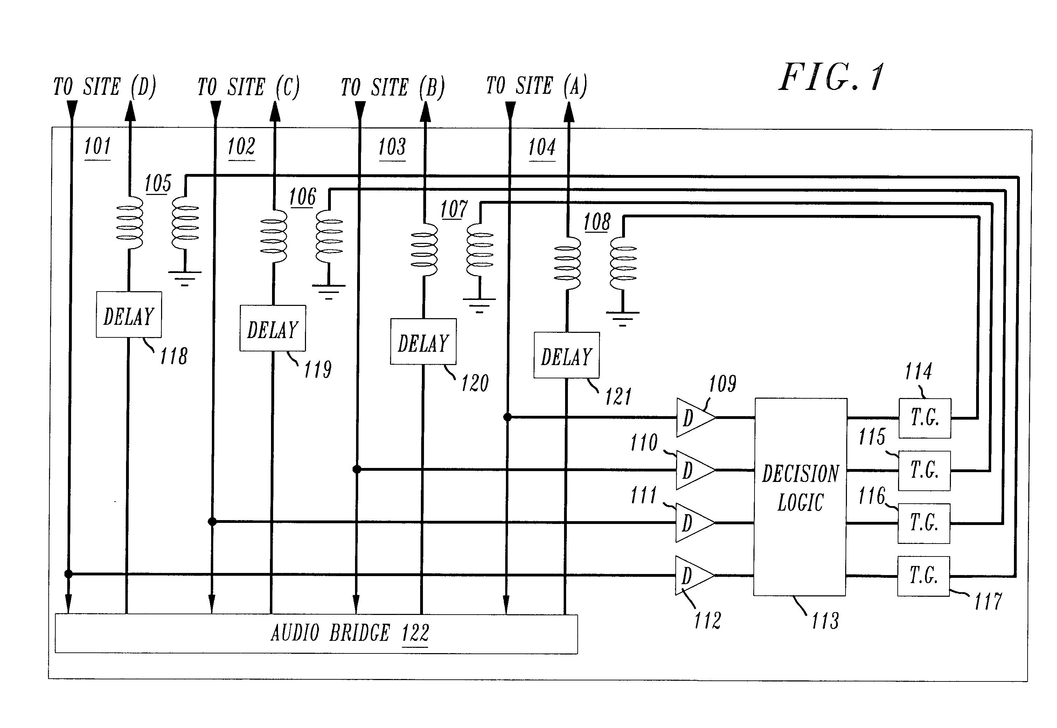

Referring to FIG. 1, there is shown a videoconference bridge (VCB) for use in implementing the invention. The arrangement shown in FIG. 1 is intended to provide conferencing among four sites, however, it is to be understood that the concepts embodied therein extend in a straighforward manner to any arbitrary number of sites.

The arrangement of FIG. 1 comprises audio bridge 122, delay elements 118-121, electromagnetic couplers 105-108, detectors 109-112, decision logic 113, and tone generators 114-117. The VCB of FIG. 1 also includes four ports 101-104 for interfacing to the site equipment, which is not show in FIG. 1 but shown and described later herein.

In operation, and after call setup, audio signals arrive from the user equipment via ports 101-104, and are routed concurrently to audio bridge 122. Audio bridge 122 then combines the signals and routes, to each port, the sum of the arriving audio signals from all other ports. For example, audio bridge 122 would send the sum of the audio signals from ports 101, and 103-104 to the output portion of port 102, and would send the sum of the audio signals from ports 102-104 to the output portion of port 101. As is shown in FIG. 1, each of the audio signals sent to the sites from the VCB is delayed by a separate one of delay elements 118-121, the purpose of which will be described later herein.

As the audio signals arrive at the VCB from ports 101-104, each is received concurrently by audio bridge 122 and a separate one of detectors 109-112, as shown in FIG. 1. Each of detectors 109-112 is arranged to monitor the energy level of its associated incoming audio signal, and to periodically output a signal which is indicative of such energy level. Techniques for doing this are well known in the art and can be used to practise this invention. For example, one possible desing for detectors 109-112, no be construed as limiting the scope of the invention, is to implement each detector as an integrator, which integrates the signal power over a specified time span to compute the signal energy, and outputs a digital signal representative of the value of that energy. The digital signals output from detectors 109-112 would then each represent the energy in a separate one of the arriving audio signals.

Decision logic 113 is designed to compare the output signals from detectors 109-112 to determine the largest such output signal thereby determining which site is currently speaking. Such a comparison may be done at periodic intervals, say every 1 second. The decision logic then determines which site is dominant in accordance with some algorithm. The algorithm should ideally be immune to a short and sudden burst of audio which could be emitted from any particular site. Algorithms for accomplishing this task are in wide use, and are well known in the art. For purposes herein, the dominant site is that site is that whose video signal is to be received by other sites, regardless of how such designation is made.

Each of tone generators 114-117 is associated with a separate one of the sites, as can be seen from FIG. 1; that is, the output of each of to generators is coupled to different one of ports 101-104, each of which is connected to a different one of sites A-D.

At periodic intervals, decision logic 113 outputs a digital signal to each of tone generators 114-117, where the digital signal designates each tone generator as dominant or passive, depending upon the status of the associated site as calculated by decision logic 113. The frequency at which these tones are output, f1, is usually less than the frequency at which decision logic 113 calculates the dominant speaker, designated f2, however, f1 may be shortened in order to provide protection against noise and to allow for changes in the dominant speaker at any time during the videoconference. This technique is best understood by way of example.

Consider a videoconference among four sites A, B, C and D, where the sites are associated with tone generators 114-117, respectively. Assume taht site D is the dominant site for an exemplary time period of 8 seconds, and that site A then becomes dominant. Further, assume that decision logic 113 performs its determination of dominant site at one second intervals, and that decision logic 113 outputs the previously described digital signal every five seconds.

Considering the beginning of the 8 second examplary time period, tone generators 114-117 output the proper tone to designate site D as dominant. After one second has elapsed, decision logic 113 determines that site D is still dominant, and consequently, no tones are transmitted to the sites. The same determinatation is made after two, three, and four seconds, with no tones being transmitted either. However, after five seconds, when decision logic 113 determines D to be the dominant site, the proper signals are output by decision logic 113 to tone generators 114-117, and each of the tone generators transmits tone to ist associated site indicating its status. Thus, every five seconds, each site receives a reaffirmation of its status, even if such status hasn't changed, thereby providing protection against the site not receiving its tones due to noise, etc.

At the end of the eighth second, decision logic 113 again determines that site D is dominant, however, no tones are output since the next tone output will normally be after ten seconds; i.e. at five second intervals. However, one second thereafter, when site A becomes dominant, decision logic 113 will determine that although no tone outputs are due for two more seconds, the dominant speaker has changed. Consequently, decision logic 113 will output proper signals and cause the tones to be transmitted back to the sites in order to change their status. Thus, a change in dominant site may occur at any time, rather than at only five second interval.

As can be appreciated from the above example, the periodic tones provide robust protection against transmission errors, either to the VCB from the sites or vice versa, while allowing the dominant site to change at any time during the videoconference. Moreover, if at any time, decison logic 113 determines that the site presently determined to be dominant is different from the site determined to be dominant one second ago, then the proper tones are output to correctly signal all sites. Only when a site is designated as dominant, it is associated video signal transmitted to the other sites. Since only one site at a time is designated as dominant, only one video broadcast channel is required. The operation of the equipment located at the individual sites for implementing the technique is now described.

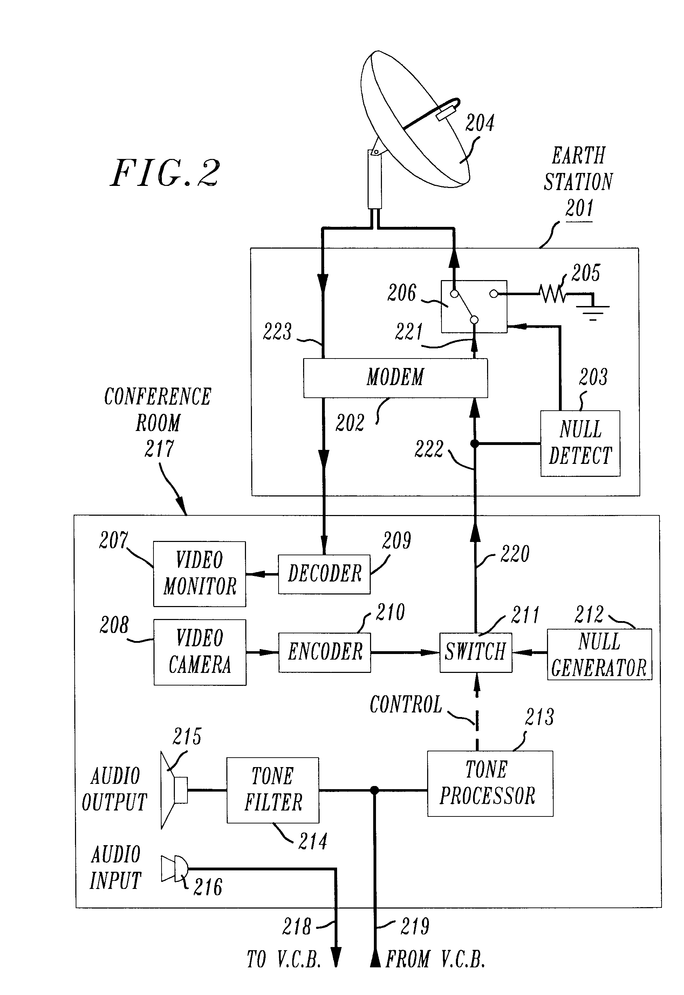

FIG. 2 shows a block diagram of an exemplary arrangement which may be employed at the individual sites. Earth station 201 and conference room 217 may be colocated, or may be geographically separated but linked together via any standard type of communications media.

Referring now to conference room 217, audio signals to be transmitted are received by audio transmitter 216, which would normally be a microphone disposed at a convenient central location in the site conference room. The audio signal to be transmitted is sent via port 218, and is always transmitted to the VCB, regardless of which site is dominant at any time. This transmission is preferably accomplished via a four wire telephone line, since this requires no echo canceler circuitry.

Audio signals transmitted to the site from the VCB, including the surimposed sequence of tones previously discussed, are received via port 219 and are passed through tone filter 214 before being conveyed to speaker 215. Tone filter 214 serves to remove the superimposed tones so that the audible output from speaker 215 does not include these tones. Tone filter 214 may be implemented by simply blanking the audio at the tone arrival times, resulting in a several millesecond silence in the speech, a silence which is hardly detectable. Tone filter 214 could also be implemented as a narrowband notch filter which would remove energy at the tone frequency, but allow all other energy to pass. While this implementation eliminates the periodic silence in the speech output, it also eliminates from the audio outputt all speech at the tone frequency, a result which may be undesirable. Many other implementations of tone filter 214 may be employed in the arrangement without departing from the scope of the invention.

Tone processor 213 also receives the incoming tones and determines whether the site is dominant or passive, based upon the tones. Tone processor 213 may be implemented using standard circuitry that is well known in the art. Tone processor 213 would decode the incoming tones and determine whether the dominant tone sequence or the passive tone sequence is present. The determination will result in an output to switch 211 which could be, for example, a binary 1 if dominant, and a binary zero if passive.

Switch 211 includes two inputs, one of which is for receiving encoded video signals, and one of which is for receiving a null signal from null generator 212. If the signal received by switch 211 from tone processor 213 indicates that the site is to be in the dominant mode, the switch 211 will route the encoded video from encoder 210 to switch output 220. Alternatively, if tone processor 213 informs switch 211 that the site is in the passive mode, switch 211 will route a null signal from null generator 212 to switch output 220.

In operation during the dominant mode, video signals from video camera 208 are encoded 210, which may be any of the standard types well known in the art. The encoded video signals are then transmitted to switch 211, and routed to earth station 201, as shown in FIG. 2. The encoded signals are modulated by modem 202, and are then output onto modem output 221. Switch 206, which connects modem output 221 to antenna 204 when the site is in the dominant mode, serves to route the modulated video signal to antenna 204, which may be, for example, a satellite antenna. The modulated signal is then transmitted to the other sites over the satellite.

While all passive sites receive the video signal of the dominant site, the system must also send a video signal to the dominant site itself. One possibility is to route the dominant site's own video signal back to the video monitor of the dominant site. This could be accomplished, for example, by installing an extra connection in switch 211 which could route the output of encoder 210 to the input of decoder 209 when the site is designated as dominant. Alternatively, such an extra connection could be employed at switch 206, which, in addition to connecting modem output 221 to antenna 204, would connect modem output 221 to modem input 223 and disconnect antenna 204 from modem input 223 when the site is designated as dominant.

In operation during the passive mode, switch 211 would transmit a null signal from null generator 212 to modem 202 via switch output 220. Null detector 203 at earth station 201 detects this null signal, which may be a predetermined sequence of bits, and causes switch 206 to route modem output 221 to ground through resistor 205. Thus, no video signal is transmitted from antenna 204. Although null generator 212 may no be required, it will prevent modem 202 from detecting a fault as may be the case if the signal on modem input 222 simply vanished.

During the passive mode, video signals received from another site that is in the dominant mode are conveyed from atenna 204 to modem 202 for demodulation. Modem output 202 then sends the demodulated video signal to decoder 209 for decoding and display on video monitor 207.

Thus, during dominant mode, video signals from the dominant site are transmitted to other sites via antenna 204 while during the passive mode video signals are received from other sites via antenna 204. It can be appreciated satellite channel over which antenna 204 transmits the video signal is shared by the plurality of sites in the entire videoconference. More particularly, since only one site is designated as dominant in any given time, the requirement for separate high bandwidth connections from each site to the VCB is eliminated. Rather, only the voice from each site need be transmitte to the VCB.

One control problem which arises in the above arrangement is that since the video signal is transmitted over a satellite link and the voice signal is transmitted through the telephone network, which may include combinations of different transmission media, the video signal may be out of synchronisation with the audio signal when the two are received at any one site. This could result in noticeable problems, such as loss of lip synchronization at a receiving video monitor. However, the satellite link will normally be much longer, and will thus introduce more delay than the audio link. Consequently, delay elements 118 through 121, shown in FIG. 1, may be variably adjusted to correct for this problem. Specifically, each of the delay elements, 118 to 121 is adjusted separately so that it delays the audio signal by an amount of time equal to the difference in delay between the audio link and the satellite link used to carry the video signal. Thus, audio and video signals which originate from a dominant site concurrently will arrive at the passive sites concurrently.

The above example is given for illustrative purposes only and is not to be constructed as limiting the scope of the invention. While a satellite broadcast channel is described, any broadcast channel may be shared among the plurality of sites in the system. Further, while superimposed tones have been used to designate active and passive sites, other types of signals, such as a periodic out of band control signal may be used or a switch at each site could allow that site to 'capture' the video channel and override the decision logic 113. Other embodiments include transmitting the audio signal in digital form as opposed to analog and superimposing the tone sequences either inside or outside the VCB. Further, more than one video broadcast channel may be utilized and as long as the number of video broadcast channels is less than the number of conference sites, significant bandwidth will be saved.

**Claims**

1.  Apparatus for use at a site in a videoconference call system, said apparatus comprising means (216) for transmitting an audio signal, means (215) for receiving an audio signal, means (213) for receiving a control signal at various times in the videoconference, said control signal designating said site as either dominant or passive, and means (211,212,203,206) responsive to said control signal for transmitting a video signal when said control signal designates said site as dominant, and for inhibiting transmission of said video signal when said control signal designates said site as passive.

2.  Apparatus as claimed in claim 1 wherein, in operation, the control signal is superimposed upon an incoming audio signal, and wherein the means for receiving the control signal comprises means for detecting the control signal in the incoming audio signal.

3.  Apparatus as claimed in claim 1 or 2 wherein said means for transmitting comprises means for transmitting the video signal to a satellite.

4.  A video conference bridge for implementing a videoconference among a plurality of sites, said bridge comprising means (122) for transmitting an audio signal from at least one site to at least one other site, means (113) for designating at least one of said sites as a dominant site, and for designating all remaining sites as passive sites, and means (114-117;105-108) for sending a control signal to one or more of the sites, said control signal being indicative of which of the sites has been designated as dominant.

5. A bridge as claimed in claim 4 wherein the means for sending comprises a plurality of couplers (105-108) for electromagnetically coupling control signal to each of a plurality of outgoing audio signals.

6. A bridge as claimed in claim 4 or 5 wherein the means for sending comprises a plurality of tone generators (114-117) for sending tones to the sites.

7. A bridge as claimed in claim 4,5 or 6 comprising a plurality of delay elements (118-121), each delay element being arranged to delay a separate audio signal being transmitted from the bridge.

8. A method of implementing a videoconference among a plurality of sites, said method comprising the steps of receiving signals from a plurality of sites (A to D) at a video conference bridge, based upon said signals, designating at least one of said sites as dominant, and at least one of said sites as passive, and transmitting control signals to said sites, said control signals being indicative of whether each of said sites has been designated as dominant or passive.

9. A method as claimed in claim 8 wherein said step of transmitting comprises the step of superimposing said control signals upon audio signals at predetermined time intervals.

10. A method as claimed in claim 8 or 9 comprising the step of broadcasting the video signal from a satellite.

*FIG. 1*

TO SITE (D)  TO SITE (C)  TO SITE (B)  TO SITE (A)

101  102  103  104

105  106  107  108

DELAY 118  DELAY 119  DELAY 120  DELAY 121

D 109  D 110  D 111  D 112

DECISION LOGIC 113

T.G. 114  T.G. 115  T.G. 116  T.G. 117

AUDIO BRIDGE 122

EP 0 472 348 A2

8

# FIG.2

- 204
- EARTH STATION 201
- 205
- 206
- 221
- 223
- 202 MODEM
- 203 NULL DETECT
- 222
- CONFERENCE ROOM 217
- 207 VIDEO MONITOR
- 209 DECODER
- 220
- 208 VIDEO CAMERA
- 210 ENCODER
- 211 SWITCH
- 212 NULL GENERATOR
- CONTROL
- 213 TONE PROCESSOR
- 215 AUDIO OUTPUT
- TONE FILTER
- 214
- 216 AUDIO INPUT
- 218 TO V.C.B.
- 219 FROM V.C.B.